# EUROPÄISCHE PATENTSCHRIFT

(11) **EP 3 872 581 B1**
(45) Veröffentlichungstag und Bekanntmachung des Hinweises auf die Patenterteilung: **07.09.2022**
(21) Anmeldenummer: 21155886.1
(22) Anmeldetag: 08.02.2021
(51) Int. Cl.: G05B 9/02, G05B 19/042

(54) **VORRICHTUNG ZUR SICHEREN ANSTEUERUNG EINES GERÄTS**
APPARATUS FOR SECURE ACTIVATION OF A DEVICE
DISPOSITIF POUR LE PILOTAGE SÉCURISÉ D' UN APPAREIL

(30) Priorität: 26.02.2020 DE 102020105080
(43) Veröffentlichungstag der Anmeldung: 01.09.2021
(73) Patentinhaber: Karl Storz SE & Co. KG, 78532 Tuttlingen (DE)
(72) Erfinder: Brüderle, Klaus, 78532 Tuttlingen (DE)
(74) Vertreter: Witte, Weller & Partner Patentanwälte mbB

(56) Entgegenhaltungen:
- DE-A1-102013 015 172
- US-A1- 2017 222 815

## Beschreibung

Die vorliegende Erfindung betrifft eine Vorrichtung zur sicheren Durchführung einer Ansteuerung und ein System zur sicheren Steuerung eines medizinischen Geräts.

Bisher werden in der Technik allgemein und insbesondere in der Medizintechnik sicherheitsrelevante Funktionen über spezielle "Erweiterungen" oder redundante Komponenten abgesichert. Diese wirken lokal, sind für jede Anwendung speziell und deswegen auch lokal implementiert. Daher wird üblicherweise der eigentliche Steuerteil um ein unabhängiges, isoliertes Sicherheitsteil ergänzt.

Der Steuerteil erfasst seine, für die Steuerung relevanten Aufgaben und interagiert über die Isolationsbarriere hinweg mit dem Sicherheitsteil, indem er Informationen und Parameter austauscht. Der Sicherheitsteil interpretiert die Infos fortwährend und bringt im Problemfall das Gerät in einen sicheren Zustand. Zum Beispiel überwachen Anzeigesysteme (Supervisory Control and Data Acquisition, SCADA) den Anzeigedatenstrom und haben eine Bildausfallerkennung oder überwachen den Datenstrom und sind in der Lage Meldungen abzusetzen oder sogar einen Notbetrieb zu organisieren.

Bei einigen Systemen, wie z.B. dem STORZ Control Bus, SCB, wird diese Sicherheit über die vom Mainboard und Betriebssystem unabhängige Bus-Karte erbracht. Es werden Datenpunkte auf dem CAN-Bus auf Aktualität geprüft und bei Bedarf lokal signalisiert (Piepser). Für die meisten dieser Systeme ist es ausreichend zu gewährleisten, dass eine entsprechende zuverlässige Signalisierung und/oder ein Abschalten von Energie für

**Bewegungsaktoren o.ä. gegeben ist, um einen sicheren Zustand zu erreichen.** Die DE 10 2013 015 172 offenbart ein Sicherheitssystem, bei dem neben dem Mikroprozessor ein Watchdog-Timer vorhanden ist, der einen Zählerwert inkrementiert. Im Rahmen einer Zeitprüfung kann der Mikroprozessor eine Schätzung des aktuellen Zählerwerts ausgeben, der über ein Vergleichselement mit dem tatsächlichen Zählerwert des Watchdog-Timers verglichen wird. Aus dem Vergleichsergebnis kann dann abgeleitet werden, ob der Mikroprozessor ordnungsgemäß arbeitet oder nicht.

Es ist daher eine Aufgabe eine verbesserte Vorrichtung zur sicheren Durchführung einer Ansteuerung sowie ein entsprechendes System aufzuzeigen.

Erfindungsgemäß wird die Aufgabe gelöst durch eine Vorrichtung zur sicheren Durchführung einer Ansteuerung, die Vorrichtung mit einer prozessorgesteuerten Verarbeitungseinheit, die dafür ausgebildet ist, ein Programm abzuarbeiten, einem Zählelement, das mit der Verarbeitungseinheit elektrisch gekoppelt ist und dafür ausgebildet ist, eine Anzahl von Zählsignalen zu zählen, die von der Verarbeitungseinheit ausgegeben werden, und diese Anzahl als Zählwert auszugeben, einem Vergleichselement, das mit der Verarbeitungseinheit und dem Zählelement elektrisch gekoppelt ist und dafür ausgebildet ist, den Zählwert mit einem Sollwert zu vergleichen, der von der Verarbeitungseinheit ausgegeben wird, und bei einer Übereinstimmung ein Gleichheitssignal auszugeben, und einem Aktivierungselement, welches dafür ausgebildet ist, eine Haltespannung auszugeben, solange das Aktivierungselement das Gleichheitssignal und wiederholt ein Triggersignal von der Verarbeitungseinheit erhält, wobei die Haltespannung einen aktiven Zustand der Ansteuerung bewirkt, wobei das Programm eine Mehrzahl an ersten Instruktionen aufweist, die jeweils dafür ausgebildet sind, ein oder mehrere der Zählsignale an das Zählelement auszugeben, eine zweite Instruktion aufweist, die dafür ausgebildet ist, den Sollwert auszugeben, der einer erwarteten Summe der von den ersten Instruktionen ausgegebenen Pulse entspricht, und eine dritte Instruktion aufweist, die dafür ausgebildet ist, das Triggersignal auszugeben.

Eine Besonderheit der vorliegenden Erfindung ist die Verbindung von verschiedenen Elementen, die auf unterschiedlichen Funktionsprinzipien basieren. Dabei ist einerseits eine Differenzierung in Software und Hardware gegeben. Zudem werden aber auch verschiedene Hardware-Elemente eingesetzt, die sich hinsichtlich einer oder mehrerer der folgenden Charakteristiken unterscheiden: Elektronische Komplexität, erforderliche Energiemenge zum Herbeiführen einer Zustandsänderung und einer unerwünschten Menge eines Energieeintrags, die zu einer Störung oder Fehlfunktion führt.

So zählt beispielsweise die prozessorgesteuerte Verarbeitungseinheit zu der Art von Hardware, die als elektronisch sehr komplex angesehen werden kann, wie z.B. ein Mikrocontroller oder Mikroprozessor, bei der eine Zustandsänderung mit einer sehr geringen Energiemenge herbeigeführt werden kann, insbesondere Kippen eines Bits, und bei der eine geringe, von außen eingebrachte Energiemenge zu einer Fehlfunktion führen kann.

Das Zählelement ist weniger komplex als die prozessorgesteuerte Verarbeitungseinheit und benötigt eine größere Energiemenge zum Herbeiführen einer Zustandsänderung, z.B. eine 5V-Flanke oder einen 5V-Puls, um den Zählwert zu erhöhen. Um eine Fehlfunktion des Zählelements herbeizuführen ist eine größere Energiemenge erforderlich als bei der prozessorgesteuerten Verarbeitungseinheit.

Das Vergleichselement und das Aktivierungselement sind nochmals einfacher aufgebaut. Dabei kann insbesondere das Aktivierungselement sehr einfach aufgebaut sein und einen erheblichen Energieeintrag erfordern, um von einem inaktiven Zustand in den aktiven Zustand überführt zu werden. Dies bedeutet auch, dass für eine Störung eine ganz erhebliche unerwünschte Energiemenge erforderlich ist.

Die prozessorgesteuerte Verarbeitungseinheit verifiziert die bei ihr angemeldeten Aufgaben. Die Verarbeitungseinheit wird ihrerseits durch nachgeschaltete Bauelemente abgesichert und erreicht darüber einen hohen Sicherheitsgrad. Diese Elemente sind so gewählt, siehe die vorhergehenden Erläuterungen, dass für ihre "Störung" entweder eine höhere oder eine andere Art der physikalischen Energie notwendig ist.

Nachfolgend soll nun das Zusammenspiel zwischen der Software bzw. dem Programm und der Hardware, d.h. der prozessorgesteuerten Verarbeitungseinheit, dem Zählelement, dem Vergleichselement und dem Aktivierungselement, erläutert werden.

Um die sichere Ansteuerung zu bewirken, weist das Programm erste, zweite und dritte Instruktionen auf. Jede der ersten Instruktionen bewirkt, dass ein oder mehrere Zählsignale an das Zählelement ausgegeben werden. Zur Vereinfachung der Erläuterung wird nachfolgend davon ausgegangen, dass jede erste Instruktion genau ein Zählsignal sendet. Es kann aber jede erste Instruktion auch mehrere Zählsignale senden und mehrere erste Instruktionen untereinander können eine unterschiedliche Anzahl von Zählsignalen senden. Das Zählelement zählt die Anzahl von Zählsignalen.

Die ersten Instruktionen werden an Stellen des Programms implementiert, die bei einer korrekten Verarbeitung durchlaufen werden müssen. Dabei steht es dem Fachmann frei, wie eng oder wie breit die Abdeckung mit den ersten Instruktionen sein soll.

An einer weiteren Stelle innerhalb des Programms, ist die zweite Instruktion implementiert, die die erwartete Summe der von den ersten Instruktionen ausgegebenen Pulse entspricht, die bei einer korrekten Funktionsweise beim Erreichen der zweiten Instruktion durchlaufen worden sein müssen. Dieser Sollwert wird an das Vergleichselement ausgegeben.

Bevor die dritte Instruktion ausgeführt wird, werden weitere Überprüfungen vorgenommen, beispielsweise ob eventuelle weitere Voraussetzungen für die Durchführung der Ansteuerung erfüllt sind. So kann insbesondere geprüft werden, ob ein Prozess, der mittels der Ausführung des Programms bedient werden soll, berechtigt ist, die Ansteuerung durchzuführen. Zusätzlich oder alternativ kann geprüft werden, ob eventuelle Rahmenbedingungen, die durch einen zweiten Prozess bestimmt werden, die Durchführung der Ansteuerung unterbinden sollten. Bei erfolgreicher Prüfung wird die dritte Instruktion ausgeführt, die das Triggersignal sendet.

Betrachtet man die einzelnen Hardware-Elemente, so ergibt sich folgendes Zusammenspiel. Das Vergleichselement erwartet, dass der vom Zählelement übermittelte Zählwert dem mittels der zweiten Instruktion ausgegebenen Sollwert entspricht. Nur wenn dies der Fall ist, wird das Gleichheitssignal ausgegeben. Falls das Programm nicht alle ersten Instruktionen wie erwartet durchlaufen hat, stimmt der Zählwert nicht mit dem Sollwert überein, und das Gleichheitssignal wird nicht ausgegeben. Eine Ansteuerung kann nicht durchgeführt werden.

Das Aktivierungselement erwartet das Gleichheitssignal vom Vergleichselement. Zum Ausgeben der Haltespannung ist aber zudem das Triggersignal erforderlich. Somit wird eine Ansteuerung unterbunden, wenn das Gleichheitssignal und/oder das Triggersignal fehlen. Konkret, wird die dritte Instruktion nicht ausgeführt, fehlt es an dem Triggersignal. Ist bei der Überprüfung der Ausführung der ersten Instruktionen ein Fehler aufgetreten, fehlt das Gleichheitssignal. Eine Durchführung der Ansteuerung ist in diesen beiden Fällen nicht möglich.

Die besondere Ausgestaltung des Aktivierungselements führt aber zudem dazu, dass auch nach einem initialen Vorhandensein von Gleichheitssignal und Triggersignal diese Signale auch weiterhin zur Verfügung stehen müssen, beim Triggersignal wiederholt, um mittels der Haltespannung einen aktiven Zustand der Ansteuerung zu bewirken. Fällt das Gleichheitssignal weg oder bleibt das Triggersignal über einen bestimmten Zeitraum aus, fällt die Haltespannung weg und die Durchführung der Ansteuerung wird gestoppt. Somit wird die korrekte Abarbeitung der ersten, zweiten und dritten Instruktionen sichergestellt.

Dadurch ist die Aufgabe vollständig gelöst.

Bei einer bevorzugten Ausgestaltung weist das Aktivierungselement einen Kondensator auf, der im Aktivierungselement über der Zeit entladen wird, wobei das Aktivierungselement die Haltespannung nicht ausgibt, wenn ein Ladezustand des Kondensators einen Schwellwert unterschreitet.

Bei dieser Ausgestaltung wird mit einem einfachen und sehr zuverlässigem physikalischen Prinzip sichergestellt, dass das Aktivierungselement inaktiv wird, d.h. die Haltespannung nicht mehr ausgibt und so die Durchführung der Ansteuerung unterbindet oder beendet. Um hier eine fehlerhafte Funktion des Aktivierungselements herbeizuführen, wäre eine ganz erhebliche unerwartete Störenergie erforderlich, die praktisch ausgeschlossen werden kann. Dadurch ist sichergestellt, dass das Aktivierungselement inaktiv wird, wenn das Gleichheitssignal fehlt und/oder das Triggersignal nicht wiederholt eintrifft.

Bei einer weiteren bevorzugten Ausgestaltung weist die Vorrichtung ein Relais aufweist, das mit dem Aktivierungselement elektrisch gekoppelt ist und ist dafür ausgebildet einen Strompfad durchzuschalten, wenn die Haltespannung anliegt, und den Strompfad zu unterbrechen, wenn die Haltespannung nicht anliegt.

Bei dieser Ausgestaltung wird die Sicherheit bei der Durchführung der Ansteuerung nochmals erhöht. Bei dem Relais handelt es sich um ein sehr einfaches mechanisches Bauteil mit elektrischer Ansteuerung. Es ist eine erhebliche Spannung erforderlich, um eine Zustandsänderung zu bewirken, und es ist ebenso eine große Störenergie erforderlich, um zu einer Fehlfunktion zu führen.

Bei einer weiteren bevorzugten Ausgestaltung ist das Aktivierungselement ein Monoflop mit einem ersten Eingang, einem zweiten Eingang und einem Ausgang, wobei der erste Eingang das Gleichheitssignal empfängt, der zweite Eingang das Triggersignal empfängt und der Ausgang die Haltespannung ausgibt.

Diese Ausgestaltung ermöglicht eine einfache und zuverlässige Realisierung des Aktivierungselements.

Bei einer weiteren bevorzugten Ausgestaltung sind das Zählelement, das Vergleichselement und das Aktivierungselement jeweils als separate Bauelemente ausgebildet.

Diese Ausgestaltung erlaubt es, die einzelnen Bauelemente einfach zu halten und dadurch eine hohe Zuverlässigkeit der einzelnen Bauelemente zu erzielen.

Bei einer weiteren bevorzugten Ausgestaltung das Zählelement, das Vergleichselement und das Aktivierungselement jeweils in einem eigenen Gehäuse ausgebildet.

Diese Ausgestaltung erlaubt es, die einzelnen Bauelemente einfach zu halten und dadurch eine hohe Zuverlässigkeit der einzelnen Bauelemente zu erzielen. Ferner kann durch die räumliche Trennung eine unerwünschte Wechselwirkung zwischen einzelnen Bauelementen reduziert oder verhindert werden, insbesondere wenn das Gehäuse eine abschirmende Eigenschaft hat, also beispielsweise aus Metall gefertigt ist.

Bei einer weiteren bevorzugten Ausgestaltung ist das Zählelement als Zähler ausgebildet und/oder das Vergleichselement als Vergleicher ausgebildet und/oder das Aktivierungselement als Monoflop ausgebildet.

Diese Ausgestaltung ermöglicht es, auf Standardbauteile zurückzugreifen, die besonders robust sind und einen fehlerfreien Betrieb ermöglichen. Dadurch ist eine zuverlässige Durchführung der Ansteuerung langfristig sichergestellt.

Gemäß einem weiteren Aspekt wird die Aufgabe gelöst durch ein System zur sicheren Steuerung eines medizinischen Geräts, aufweisend das medizinische Gerät und eine zuvor beschriebene Vorrichtung, wobei das medizinische Gerät von der Vorrichtung gesteuert wird und eine Funktion des medizinischen Geräts von einer korrekten Ausführung des Programms und dem Vorhandensein der Haltespannung abhängig ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung ist in der Zeichnung dargestellt und werden in der nachfolgenden Beschreibung näher erläutert. Es zeigen:
- Fig. 1: eine Ausführungsform einer Vorrichtung zur sicheren Durchführung einer Ansteuerung; und

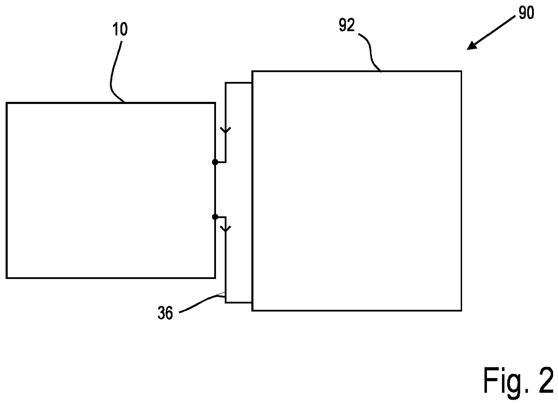

- Fig. 2: eine Ausführungsform eines Systems zur sicheren Steuerung eines medizinischen Geräts.

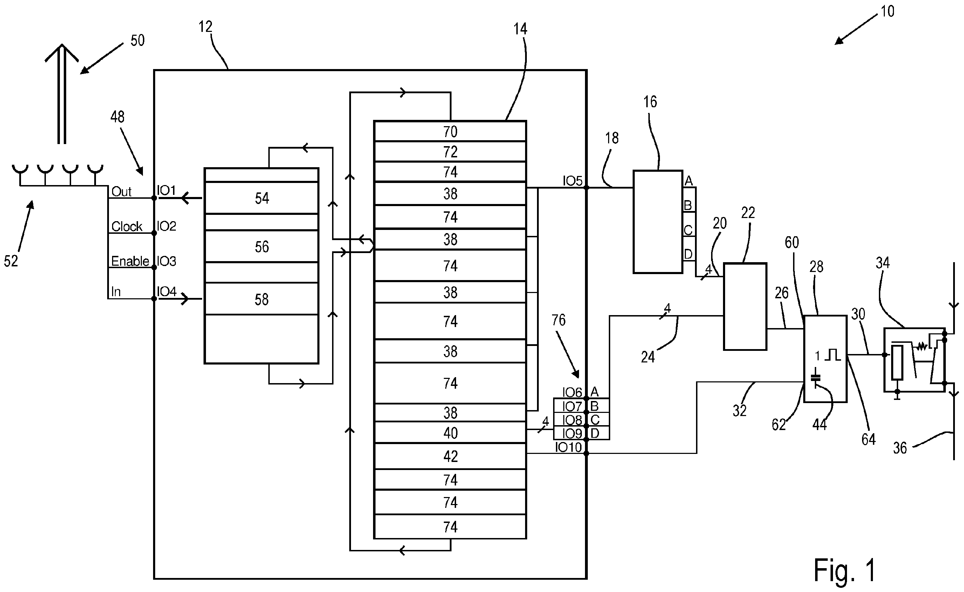

Fig. 1 zeigt eine Ausführungsform einer Vorrichtung 10 zur sicheren Durchführung einer Ansteuerung. Die Vorrichtung 10 weist eine prozessgesteuerte Verarbeitungseinheit 12 auf, die der dafür ausgebildet ist, ein Programm 14 abzuarbeiten.

Die Vorrichtung 10 weist zudem ein Zählelement 16 auf, das mit der Verarbeitungseinheit 12 elektrisch gekoppelt ist und dafür ausgebildet ist, eine Anzahl von Zählsignalen 18 zu zählen, die von der Verarbeitungseinheit 12, hier über einen Port IO5, ausgegeben werden, und diese Anzahl als Zählwert 20 auszugeben.

Ferner weist die Vorrichtung 10 ein Vergleichselement 22 auf, das mit der Verarbeitungseinheit 12 und mit dem Zählelement 16 elektrisch gekoppelt ist. Das Vergleichselement 22 ist dafür ausgebildet, den Zählwert 20 mit einem Sollwert 24 zu vergleichen, der von der Verarbeitungseinheit 12 ausgegeben wird, hier über die Ports IO6, IO7, IO8, IO9, und bei einer Übereinstimmung ein Gleichheitssignal 26 auszugeben.

Ein weiteres Element der Vorrichtung 10 ist ein Aktivierungselement 28, welches dafür ausgebildet ist, eine Haltespannung 30 auszugeben, solange das Aktivierungselement 28 das Gleichheitssignal 26 und wiederholt ein Triggersignal 32 von der Verarbeitungseinheit 12 über den Port IO10 erhält, wobei die Haltespannung 30 einen aktiven Zustand der Ansteuerung bewirkt.

Bei der hier gezeigten Ausgestaltung weist die Vorrichtung 10 schließlich auch ein Relais 34 auf, das mit dem Aktivierungselement 28 elektrisch gekoppelt ist. Das Relais 34 ist dafür ausgebildet, einen Strompfad 36 durchzuschalten, wenn die Haltespannung 30 anliegt, und den Strompfad 36 zu unterbrechen, wenn die Haltespannung nicht anliegt.

Das Programm 14 weist eine Mehrzahl an ersten Instruktionen 38 auf, die jeweils dafür ausgebildet sind, hier anhand der Linien symbolisch dargestellt, ein oder mehrere Zählsignale 18 an das Zählelement 16 auszugeben. Das Programm 14 weist außerdem eine zweite Instruktion 40 aus, die dafür ausgebildet ist, den Sollwert 24 auszugeben, der einer erwarteten Summe der von den ersten Instruktionen 38 ausgegebenen Pulsen entspricht. Das Programm 14 weist außerdem eine dritte Instruktion auf, die dafür ausgebildet ist, das Triggersignal 32 auszugeben.

Das Aktivierungselement 28 weist, hier symbolisch dargestellt, einen Kondensator 44 auf, der im Aktivierungselement 28 über der Zeit entladen wird, wobei das Aktivierungselement 28 die Haltespannung 30 nicht ausgibt, wenn ein Ladezustand des Kondensators 44 einen Schwellwert unterschreitet.

Bei der hier gezeigten Ausführungsform weist das Programm 14 eine Kommunikationsroutine 46 auf, die über eine Schnittstelle 48 mit den Ports IO1, IO2, IO3, IO4 eine Anbindung an einen Bus 50 bildet, hier über einen Optokoppler 52. In einem Schritt 54 sendet die Kommunikationsroutine 46 einen Basisschlüssel der Vorrichtung 10, beispielsweise eine eindeutige Identifikationsnummer, über die Schnittstelle 48 und den Bus 50 an eine nicht gezeigte Hauptsteuerung.

In einem Schritt 56 wird ein bereits früher erhaltener Prozessschlüssel von einer ersten Speicherstelle an eine zweite Speicherstelle verschoben. In einem Schritt 58 empfängt die Kommunikationsroutine 46 von der Hauptsteuerung über den Bus 50 und die Schnittstelle 48 einen neuen Prozessschlüssel. Nach einem erfolgreichen Abschluss des Schritts 58 befindet sich dann ein neuer Prozessschlüssel in der ersten Speicherstelle und ein bereits zuvor erhaltener Prozessschlüssel in der zweiten Speicherstelle.

Einer dieser Prozessschlüssel oder beide Prozessschlüssel können beispielsweise verwendet werden, um vor oder während des Ausführens der dritten Instruktion 42 zu prüfen, ob die Anforderung der Ansteuerung an die Vorrichtung 12 von einer autorisierten Steuerung oder von einer autorisierten Person angefordert wurde. Der Aufruf der Kommunikationsroutine 46 kann an beliebigen Stellen des Programms 14 erfolgen. Ebenso kann eine Überprüfung der Prozessschlüssel an beliebigen Stellen des Programms 14 erfolgen.

Das Aktivierungselement 28 ist hier ein Monoflop mit einem ersten Eingang 60, einem zweiten Eingang 62 und einem Ausgang 64, wobei der erste Eingang 60 das Gleichheitssignal 26 empfängt, der zweite Eingang 62 das Triggersignal 32 empfängt und der Ausgang 64 die Haltespannung 30 ausgibt.

Nachfolgend soll nun ein beispielhafter Ablauf der Aktivierung der Ansteuerung erläutert werden. In einem Schritt 70 wird optional ein neuer Basisschlüssel erzeugt. In einem Schritt 72 wird festgelegt, dass die ersten Instruktionen 38 für eine Aktivierung der Steuerung fünf Pulse an das Zählelement 16 gesendet haben müssen. Der Schritt 74, wie auch die anderen Schritte 74, stellt einen Platzhalter für andere Instruktionen oder Programmabschnitte des Programms 14 dar.

Jede der gezeigten Instruktionen 38 sendet ein Zählsignal 18 an das Zählelement 16. Somit wird erwartet, dass bei einer korrekten Abarbeitung des Programms 14 bei Erreichen der zweiten Instruktion 40 insgesamt fünf Zählsignale 18 an das Zählelement 16 gesendet worden sind. Mittels der zweiten Instruktion 40 wird dieser Sollwert 24 über die Schnittstelle 76 mit den Ports IO6, IO7, IO8, IO9 an das Vergleichselement 22 übermittelt. Das Vergleichselement 22 gibt das Gleichheitssignal 26 nur dann aus, wenn sich der Zählerstand des Zählelements 16 in gleicher Weise erhöht hat wie es der Sollwert 24 vorgibt.

Die dritte Instruktion 42 gibt das Triggersignal 32 aus, ggf. in Abhängigkeit von weiteren Bedingungen und/oder einem Erfolg bei weiteren Überprüfungen. Wenn das Gleichheitssignal 26 und das Triggersignal 32 am Aktivierungselement 28, hier ein Monoflop, anliegen, wird die Haltespannung 30 ausgegeben.

Wenn das Relais 34 mit der Haltespannung 30 versorgt wird, wird der Strompfad 36 geschlossen. Dies ermöglicht dann die Ansteuerung.

## Patentansprüche

1. Vorrichtung (10) zur sicheren Durchführung einer Ansteuerung, die Vorrichtung (10) mit
- einer prozessorgesteuerten Verarbeitungseinheit (12), die dafür ausgebildet ist, ein Programm (14) abzuarbeiten,
- einem Zählelement (16), das mit der Verarbeitungseinheit (12) elektrisch gekoppelt ist und dafür ausgebildet ist, eine Anzahl von Zählsignalen (18) zu zählen, die von der Verarbeitungseinheit ausgegeben werden, und diese Anzahl als Zählwert (20) auszugeben,
- einem Vergleichselement (22), das mit der Verarbeitungseinheit (12) und dem Zählelement (16) elektrisch gekoppelt ist und dafür ausgebildet ist, den Zählwert (20) mit einem Sollwert (24) zu vergleichen, der von der Verarbeitungseinheit (12) ausgegeben wird, und bei einer Übereinstimmung ein Gleichheitssignal (26) auszugeben, und
- einem Aktivierungselement (28), welches dafür ausgebildet ist, eine Haltespannung (30) auszugeben, solange das Aktivierungselement (28) das Gleichheitssignal (26) und wiederholt ein Triggersignal (32) von der Verarbeitungseinheit (12) erhält, wobei die Haltespannung (30) einen aktiven Zustand der Ansteuerung bewirkt,
wobei das Programm (14) eine Mehrzahl an ersten Instruktionen (38) aufweist, die jeweils dafür ausgebildet sind, ein oder mehrere der Zählsignale (18) an das Zählelement (16) auszugeben, eine zweite Instruktion (40) aufweist, die dafür ausgebildet ist, den Sollwert (24) auszugeben, der einer erwarteten Summe der von den ersten Instruktionen (38) ausgegebenen Pulse entspricht, und eine dritte Instruktion (42) aufweist, die dafür ausgebildet ist, das Triggersignal (32) auszugeben.

2. Vorrichtung nach Anspruch 1, wobei das Aktivierungselement (28) einen Kondensator (44) aufweist, der im Aktivierungselement (28) über der Zeit entladen wird, wobei das Aktivierungselement (28) die Haltespannung (30) nicht ausgibt, wenn ein Ladezustand des Kondensators (44) einen Schwellwert unterschreitet.

3. Vorrichtung nach einem der vorhergehenden Ansprüche, wobei die Vorrichtung (10) ein Relais (34) aufweist, das mit dem Aktivierungselement (28) elektrisch gekoppelt ist und dafür ausgebildet ist einen Strompfad (36) durchzuschalten, wenn die Haltespannung anliegt, und den Strompfad (36) zu unterbrechen, wenn die Haltespannung nicht anliegt.

4. Vorrichtung nach einem der vorhergehenden Ansprüche, wobei das Aktivierungselement (28) ein Monoflop mit einem ersten Eingang (60), einem zweiten Eingang (62) und einem Ausgang (64) ist, wobei der erste Eingang (60) das Gleichheitssignal (26) empfängt, der zweite Eingang (62) das Triggersignal (32) empfängt und der Ausgang (64) die Haltespannung (30) ausgibt.

5. Vorrichtung nach einem der vorhergehenden Ansprüche, wobei das Zählelement (16), das Vergleichselement (22) und das Aktivierungselement (28) jeweils als separate Bauelemente ausgebildet sind.

6. Vorrichtung nach einem der vorhergehenden Ansprüche, wobei das Zählelement (16), das Vergleichselement (22) und das Aktivierungselement (28) jeweils in einem eigenen Gehäuse ausgebildet sind.

7. Vorrichtung nach einem der vorhergehenden Ansprüche, wobei das Zählelement (16) als Zähler ausgebildet ist und/oder das Vergleichselement (22) als Vergleicher ausgebildet ist und/oder das Aktivierungselement 828) als Monoflop ausgebildet ist.

8. System (90) zur sicheren Steuerung eines medizinischen Geräts (92), aufweisend das medizinische Gerät (92) und eine Vorrichtung (10) nach einem der vorhergehenden Ansprüche, wobei das medizinische Gerät (92) von der Vorrichtung (10) gesteuert wird und eine Funktion des medizinischen Geräts (92) von einer korrekten Ausführung des Programms (14) und dem Vorhandensein (30) der Haltespannung abhängig ist.

## Claims

1. Apparatus (10) for safe implementation of a control, the apparatus (10) having
- a processor-controlled processing unit (12) which is designed to work through a program (14),
- a counting element (16) which is electrically coupled to the processing unit (12) and designed to count a number of count signals (18) output by the processing unit and output this number as count value (20),
- a comparing element (22) which is electrically coupled to the processing unit (12) and to the counting element (16) and designed to compare the count value (20) with a target value (24) output by the processing unit (12) and output an equality signal (26) in the case of correspondence, and
- an activating element (28) which is designed to output a hold voltage (30) for as long as the activating element (28) receives the equality signal (26) and repeatedly receives a trigger signal (32) from the processing unit (12), the hold voltage (30) causing an active state of control,
wherein the program (14) has a plurality of first instructions (38), each of which is designed to output one or more of the count signals (18) to the counting element (16), a second instruction (40), which is designed to output the target value (24) that corresponds to an expected summation of the pulses output by the first instructions (38), and a third instruction (42), which is designed to output the trigger signal (32).

2. Apparatus according to Claim 1, wherein the activating element (28) comprises a capacitor (44) which is discharged over time in the activating element (28), the activating element (28) not outputting the hold voltage (30) should a charge state of the capacitor (44) drop below a threshold.

3. Apparatus according to either of the preceding claims, wherein the apparatus (10) comprises a relay (34) which is electrically coupled to the activating element (28) and designed to connect a current path (36) if the hold voltage is applied and interrupt the current path (36) if the hold voltage is not applied.

4. Apparatus according to any one of the preceding claims, wherein the activating element (28) is a monoflop with a first input (60), a second input (62) and an output (64), the first input (60) receiving the equality signal (26), the second input (62) receiving the trigger signal (32) and the output (64) outputting the hold voltage (30) .

5. Apparatus according to any one of the preceding claims, wherein the counting element (16), the comparing element (22) and the activating element (28) are each formed as separate components.

6. Apparatus according to any one of the preceding claims, wherein the counting element (16), the comparing element (22) and the activating element (28) are each formed in their own housing.

7. Apparatus according to any one of the preceding claims, wherein the counting element (16) is in the form of a counter and/or the comparing element (22) is in the form of a comparator and/or the activating element (28) is in the form of a monoflop.

8. System (90) for safely controlling a medical device (92), comprising the medical device (92) and an apparatus (10) according to any one of the preceding claims, wherein the medical device (92) is controlled by the apparatus (10) and a function of the medical device (92) depends on a correct implementation of the programme (14) and the presence (30) of the hold voltage.

## Revendications

1. Dispositif (10) de mise en œuvre sécurisée d'une commande, le dispositif (10) comprenant
- une unité de traitement (12) commandée par processeur qui est conçue pour traiter un programme (14),
- un élément de comptage (16) couplé électriquement à l'unité de traitement (12) et conçu pour compter un certain nombre de signaux de comptage (18), qui sont délivrés par l'unité de traitement, et pour délivrer ce nombre sous la forme d'une valeur de comptage (20),
- un élément de comparaison (22) qui est couplé électriquement à l'unité de traitement (12) et à l'élément de comptage (16) et qui est conçu pour comparer la valeur de comptage (20) à une valeur cible (24), qui est délivrée par l'unité de traitement (12), et pour délivrer un signal d'égalité (26) en cas de coïncidence, et
- un élément d'activation (28) qui est conçu pour délivrer une tension de maintien (30) tant que l'élément d'activation (28) reçoit de l'unité de traitement (12) le signal d'égalité (26) et de manière répétée un signal de déclenchement (32), la tension de maintien (30) provoquant un état actif de la commande,
le programme (14) comportant une pluralité de premières instructions (38) qui sont chacune conçues pour délivrer un ou plusieurs des signaux de comptage (18) à l'élément de comptage (16), une deuxième instruction (40) qui est conçue pour délivrer la valeur cible (24) qui correspond à une somme attendue des impulsions délivrées par les premières instructions (38) et une troisième instruction (42) qui est conçue pour délivrer le signal de déclenchement (32).

2. Dispositif selon la revendication 1, l'élément d'activation (28) comportant un condensateur (44) qui se décharge dans l'élément d'activation (28) au cours du temps, l'élément d'activation (28) ne délivrant pas la tension de maintien (30) lorsqu'un état de charge du condensateur (44) tombe au-dessous d'une valeur seuil.

3. Dispositif selon l'une des revendications précédentes, le dispositif (10) comportant un relais (34) qui est couplé électriquement à l'élément d'activation (28) et qui est conçu pour mettre en circuit un chemin de courant (36), lorsque la tension de maintien est présente, et pour interrompre le chemin de courant (36) lorsque la tension de maintien n'est pas présente.

4. Dispositif selon l'une des revendications précédentes, l'élément d'activation (28) étant une bascule monostable pourvue d'une première entrée (60), d'une deuxième entrée (62) et d'une sortie (64), la première entrée (60) recevant le signal d'égalité (26), la deuxième entrée (62) recevant le signal de déclenchement (32) et la sortie (64) délivrant la tension de maintien (30).

5. Dispositif selon l'une des revendications précédentes, l'élément de comptage (16), l'élément de comparaison (22) et l'élément d'activation (28) étant chacun conçus sous la forme de composants séparés.

6. Dispositif selon l'une des revendications précédentes, l'élément de comptage (16), l'élément de comparaison (22) et l'élément d'activation (28) étant chacun conçu dans un boîtier propre.

7. Dispositif selon l'une des revendications précédentes, l'élément de comptage (16) étant conçu sous la forme d'un compteur et/ou l'élément de comparaison (22) étant conçu sous la forme d'un comparateur et/ou l'élément d'activation 828) étant conçu sous la forme d'une bascule monostable.

8. Système (90) de commande sécurisée d'un appareil médical (92), ledit système comportant l'appareil médical (92) et un dispositif (10) selon l'une des revendications précédentes, l'appareil médical (92) étant commandé par le dispositif (10) et une fonction de l'appareil médical (92) dépendant d'une exécution correcte du programme (14) et de la présence (30) de la tension de maintien.
